# EUROPEAN PATENT APPLICATION

(11) **EP 2 916 539 A1**
(43) Date of publication of application: **09.09.2015**
(21) Application number: 15157609.7
(22) Date of filing: 04.03.2015
(51) Int. Cl.: H04N 5/44, H04N 21/418, H04N 21/4223, H04N 21/45

(54) **Display apparatus and controlling method thereof**

(30) Priority: 05.03.2014 KR 20140025975
(71) Applicant: Samsung Electronics Co., Ltd, Gyeonggi-do 443-742 (KR)
(72) Inventor: Song, Hyun-jun, Gyeonggi-do (KR); Choi, Song-ah, Gyeonggi-do (KR); Cho, Eun-ae, Seoul (KR); Bae, Dae-gyu, Gyeonggi-do (KR)
(74) Representative: Appleyard Lees

(57) **Abstract**

A display apparatus and a controlling method thereof are provided. According to an aspect of an exemplary embodiment, a display apparatus including a photographing unit to photograph an image, an output unit to output audio data and video data related to content, a storage to store a plurality of face images corresponding to a plurality of users, and viewing time information to control content viewing time of at least one user from among the plurality of users, and a controller to identify a defined user by using the photographed image and the stored plurality of face images, to determine a remaining viewable time of the defined user based on viewing time information corresponding to the define user from among the plurality of users and whether the defined user is identified in the photographed image continuously at predetermined time intervals, and control output of the output unit based on the determined remaining viewable time.

## Description

### CROSS-REFERENCE TO RELATED APPLICATION(S)

This application claims priority from Korean patent application no. 10-2014-0025975 filed on March 5, 2014, the entire disclosure of which is hereby incorporated by reference in its entirety.

### BACKGROUND

### Field

Apparatuses and methods consistent with exemplary embodiments relate to a display apparatus and a controlling method thereof, and more particularly to a display apparatus capable of face recognition and a controlling method thereof.

### Description of the Related Art

With the development of network communications, various display apparatuses have been developed and distributed. These display apparatuses, such as smartphones and smart televisions (TVs), enable data communication with an external server via the Internet, receiving various contents, and searching for content-related information, or the like.

Accordingly, a user can rapidly search for and download desired contents by using display apparatuses, such as smartphone and smart TVs, which enable network communications.

However, there is a problem that, due to development of communications, a user, by using display apparatuses, may easily gain access to content which the user is not authorized to access. In order to solve said problem, a related-art display apparatus has a function to determine content use right of a user for contents which are graded through user authentication process, in order to control content use right of a user.

Another problem, in case of display apparatuses such as smart phones which are portable, children and young adults, who may lack judgment, can use display apparatuses without control by their protectors/parents and can thoughtlessly access unauthorized content which should be accessed only after gaining consent from a protector/parent. Accordingly, in order to solve this problem, a related-art display apparatus has controlled content use right of a user by using a method of setting content use time by allowing a user's protector/parent to manipulate the display apparatus.

However, the control method, described in the related art, for content use right is inconvenient, as a protector of a user should directly manipulate a display apparatus to control content use right of the user. The control method is temporary, and thus, a user, even when content use right is controlled through a display apparatus, may gain access to the content through different routes. Therefore, there is a problem that immature/young users may thoughtlessly gain access to unauthorized content.

### SUMMARY

One or more exemplary embodiments is provide control output of content which is output through a display apparatus based on viewing time information which is set by users.

According to an aspect of an exemplary embodiment, there is provided a display apparatus including a photographing unit to photograph an image, an output unit to output audio data and video data related to content, a storage to store a plurality of face images corresponding to a plurality of users, and viewing time information to control content viewing time of at least one user from among the plurality of users, and a controller to identify a defined user by using the photographed image and the stored plurality of face images, to determine a remaining viewable time of the defined user based on viewing time information corresponding to the define user from among the plurality of users and whether the defined user is identified in the photographed image continuously at predetermined time intervals, and control output of the output unit based on the determined remaining viewable time.

The controller, in response to the content being output through the output unit, after obtaining pre-stored viewing time information corresponding to the defined user, may control the photographing unit to photograph the image at the predetermined time intervals.

The controller, in response to the image being photographed at predetermined time intervals by the photographing unit, may count the remaining viewable time of the content based on content viewing time information included in the viewing time information.

The controller, in response to the image not being photographed at the predetermined time interval by the photographing unit, may hold the remaining viewable time of the content at a point in time when the face image of the user was last photographed.

The controller, in response to the image not being photographed at the predetermined time interval by the photographing unit, may control the output unit to stop output of the content.

The controller, while the remaining viewable time of the content is being held, based on whether the image is photographed within the predetermined threshold time, by the photographing unit, may control the output unit to resume counting of the remaining viewable time of the content from the remaining viewable time being held, or to terminate output of the content.

The controller, in response to the remaining viewable time being elapsed, may control the output unit to terminate output of the content and to output a message which indicates expiration of allowed viewable time of the content and to display a password input field for extension of the allowed viewable time of the content.

The display apparatus may further include a communicator which communicates with a preregistered periphery terminal, and an input unit which receives a user input, wherein the controller may, in response to the remaining viewable time of the content being elapsed, transmit through the communicator the message to the preregistered periphery terminal, and determine an extension of the allowed viewable time of the content depending on whether the preregistered password information is received through the communicator within predetermined threshold time or whether the password information is input through the input unit.

The controller, in response to images of at least two users being photographed by the photographing unit, may display a selection menu to select one of the at least two users for control of content viewing time from among the at least two photographed users, and determines the remaining viewable time of the content based on viewing time information of the selected user.

The controller, in response to images of at least two users being photographed by the photographing unit, may determine the remaining viewable time of the content based on viewing time information of a selected user selected as a major viewing target of the content which is output through the output unit out, from among the at least two users, in accordance with content setting information included in pre-stored viewing time information related to the photographed images of the at least two users.

According to an aspect of another exemplary embodiment, there is provided a method for controlling a display apparatus includes photographing an image, outputting audio data and video data related to content, identifying a defined user by using the photographed image and a stored plurality of face images, determining a remaining viewable time of the defined user based on viewing time information corresponding to the defined user from among the plurality of users and whether the defined user is identified in the photographed image continuously at predetermined time intervals; and controlling output of the content based on the determined remaining viewable time.

The viewing time information may include content viewing time information to control a content viewing time of the user and the photographing, and the photographing comprises, in response to the content being output after obtaining pre-stored viewing time information related to the defined user, photographing the image at the predetermined time intervals.

The determining may include, in response to the image photographed at predetermined time intervals, counting the remaining viewable time of the content based on content viewing time.

The determining may include, in response to the image not being photographed at the predetermined time intervasl, holding the remaining viewable time of the content at a point in time when the face image of the user was last photographed.

The controlling may include, in response to the image not being photographed at the predetermined time intervals, stopping output of the content.

The determining may include, while the remaining viewable time of the content is being held, in response to the image being photographed within a predetermined threshold time, resuming counting of the remaining viewable time of the content from the remaining viewable time being held, wherein the controlling comprises, in response to the face image of the user not being photographed within the predetermined threshold time, stopping output of the content.

The method may further include terminating, in response to the remaining time of the content being elapsed, output of the content, and outputting and transmitting to a preregistered periphery terminal a message which indicates expiration of allowed viewable time of the content and a password input field for extension of the allowed viewable time of the content, after termination of the output of the content.

The method may further include determining extension of the allowed viewable time of the content based on whether the password is received through the preregistered periphery terminal within predetermined threshold time or whether the password information is input.

The determining may include, in response to images of at least two users being photographed, displaying a selection menu to select a user, from among the at least two users, for control of content viewing time, and determining the remaining viewable time of the content based on viewing time information of the selected user selected through the selection menu.

The determining may include, in response to images of at least two users being photographed, determining the remaining viewable time of the content based on viewing time information of a selected user selected as a major viewing target of the content which is output from among the at least two users, in accordance with content setting information included in pre-stored viewing time information related to the photographed images of the at least two users.

### BRIEF DESCRIPTION OF THE DRAWINGS

The above and/or other aspects will be more apparent by describing in detail exemplary embodiments, with reference to the accompanying drawings, in which:
FIG. 1 is a block diagram illustrating a display apparatus according to an exemplary embodiment,
FIG. 2 illustrates an exemplary view for selecting a user who determines remaining viewable time at a display apparatus among a plurality of users, according to an exemplary embodiment,
FIG. 3 illustrates an exemplary view for selecting a user who determines remaining viewable time of content at a display apparatus, according to an exemplary embodiment,
FIG. 4 illustrates an exemplary view guiding extension of content of which viewable time has expired, at a display apparatus, according to an exemplary embodiment,
FIG. 5 is a flowchart of a method for controlling the operations of a display apparatus according to an exemplary embodiment,
FIG. 6 is a flowchart of a method for determining remaining viewable time of content at a display apparatus according to an exemplary embodiment,
FIG. 7 is a flowchart of a method for controlling output of content of which viewable time has expired according to an exemplary embodiment.

### DETAILED DESCRIPTION

Hereinafter, certain exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

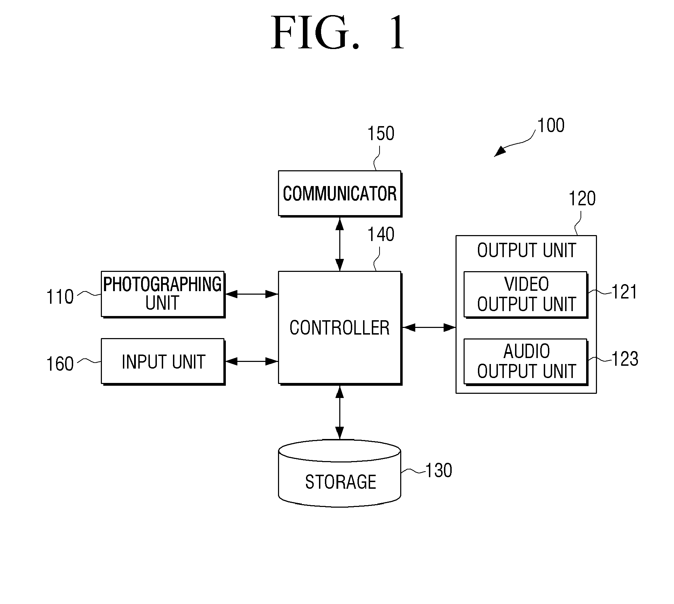

FIG. 1 illustrates a block diagram illustrating a display apparatus according to an exemplary embodiment.

As illustrated in FIG. 1, a display apparatus 100 is a terminal apparatus capable of taking a photograph, such as smart TVs and smartphones, and the display apparatus includes a photographing unit 110, an output unit 120, a storage 130, and a controller 140.

When the display apparatus 100 is powered on, the photographing unit 110 takes a photograph of an image through a camera (not illustrated) provided in the display apparatus 100.

According to an exemplary embodiment, when the display apparatus 100 is powered on, the photographing unit 110 through a camera (not illustrated) may take a photograph of a face image of a user located in a preset photographing area. To be specific, when the display apparatus 100 is powered on, the photographing unit 110, by using a predefined face recognition algorithm, may detect a face area of a user within a preset photographing area, and may take a photograph of a face image of a user based on the detected face area.

According to another exemplary embodiment, when the display apparatus 100 is powered on, the photographing unit 110 takes a photograph of a corresponding photographing area. To be specific, the photographing unit 110 may detect activities of a user at home within the preset photographing area, and when a movement according to the activities of a user is sensed, may take a photograph of the corresponding photographing area. However, the functioning of the photographing unit 110 is not limited thereto. When the display apparatus 100 is powered on, the photographing unit 110, by determining whether a user approaches a preset threshold range, may take a photograph of a face image of a user who is located adjacent to the display apparatus 100.

The output unit 120 outputs audio data and video data related to the content requested by a user. The output unit 120 may output video data and audio data related to content through a video output unit 121 and an audio output unit 123. According to an exemplary embodiment, the display apparatus 100 may receive, through a tuner (not illustrated), broadcast-related content including video and audio data through at least one channel from among ground wave channel, cable channel, and satellite broadcasting channel. When the content is received, the output unit 120 separates video data and audio data included in the content, and the video output unit 121 and the audio output unit 123 processes and outputs the video and audio data separated from the received content as a signal.

According to another exemplary embodiment, the display apparatus 100, through the communicator 150, may receive content requested by a user from an external server (not illustrated) providing content or from a preregistered periphery terminal apparatus. When the content is received, the output unit 120 may, through at least one of the video output unit 121 and the audio output unit 123, output the content received from the external server (not illustrated).

As described above, the communicator 150 which performs data communication with the external server (not illustrated) may include various communication modules such as near field wireless communication module (not illustrated) and wireless communication module (not illustrated) according to an exemplary embodiment. Herein, the communication module may be the near field wireless communication module (not illustrated), for example, Bluetooth and Zigbee, and the wireless communication module (not illustrated) may be a module which is connected to external network according to wireless communication protocol such as wireless-fidelity (Wi-Fi) and IEEE and performs communication. However, the wireless communication module is not limited thereto, and the wireless communication module (not illustrated) may be a mobile communication module which accesses mobile communication network and performs communication according to various mobile communication specifications such as 3rd Generation (3G), 3rd Generation Partnership Project (3GPP), and Long Term Evolution (LTE).

Therefore, when content is received from a server through the communicator 150, the output unit 120 may output corresponding content through at least one of the video output unit 121 and the audio output unit 123.

According to another exemplary embodiment, the display apparatus 100 may receive content requested by a user from among a plurality of content pre-stored in a recordable medium apparatus through an interface (not illustrated) which is physically connected to various recordable medium apparatuses such as compact disc (CD), digital video disc (DVD), hard disc, Blu-ray Disc, memory card, and USB memory. Accordingly, when content is received from the recordable medium apparatus which is physically connected to the interface (not illustrated), the output unit 120 may output the corresponding content through at least one of the video output unit 121 and the audio output unit 123.

The storage 130 of the display apparatus 100 stores face images of a plurality of users, and viewing time information to control content viewing time of the content of at least one user from among face images of a plurality of users. To be specific, the storage 130 may store face images of a plurality of users, and may store viewing time information of at least one user set by a user to be matched with a face image of the user.

Furthermore, the storage 130 may be managed by various operating programs and operating systems to control operations of the display apparatus 100, perform operations of the display apparatus 100 by using resources of the operating system, and store various application programs which provide a user interface. Further, the storage 130 may store various multimedia data processed according to a control command of the controller 140, content data, data received from the external apparatus (not illustrated), and signal or information which is input and output in response to the operations of the configurations of the display apparatus 100.

The controller 140 performs overall control for the configurations which constitute the display apparatus 100. In particular, the controller 140 identifies a defined user by being the photographed image and pre-stored plurality of face images in the storage 130, determines remaining viewable time of the defined user based on viewing time information corresponding to the defined user from among the plurality of users and whether the defined user is identified in the photographed image continuously at predetermined time intervals, and control output of the output unit based on the determined remaining viewable time.

To be specific the controller 140, depending on whether viewing time information pre-stored in the storage 130 and face images of the corresponding users photographed on a regular basis are in relation to a face image of a user photographed through the photographing unit 110, determines remaining viewable time of the content which is output through the output unit 120. The controller 140, based on the determined remaining viewing time information, controls output of the output unit 120 which outputs the corresponding content.

To be specific, the controller 140, when a face image of a user is photographed through the photographing unit 120, determines whether a face image related to a photographed image is stored from among stored face images of a plurality of users stored in the storage 130 by using predefined matching algorithm.

As a result, when a face image related to a photographed face image is found to be stored in the storage 130, the controller 140 determines whether viewing time information set in relation to a pre-stored face image is stored in the storage 130. As described above, viewing time information is information to control viewing time of the content for a user, and the information may include content viewing time information. Therefore, the controller 140 may determine remaining viewable time of the content which is output through the output unit 120 based on content viewing time information included in viewing time information.

According to an additional aspect of the embodiments, the controller 140, when face images of at least two users are photographed through the photographing unit 120, may determine a user of the major viewing target of the content which is output through the output unit 120 based on content setting information included in pre-stored viewing time information in relation to face images of the photographed at least two users. Herein, the content setting information may be genre information on the content.

For example, content setting information related to content use of a user A, from among a plurality of users photographed through the photographing unit 120, may be genre information on drama, sports, and news, and content setting information of a user B may be genre information on kids and education. The content output through the output unit 120 may be content of a genre which is provided for kids. In this case, the controller 140 may determine the user B who is set as a user of content which is output through the output unit 120 as a user of a main viewing target based on content setting information of each of user A and user B.

As such, once a user of the main viewing target is determined, the controller 140, based on content viewing time information included in viewing time information of the corresponding user, may determine remaining viewable time on the content which is output through the output unit 120.

According to an additional aspect of the embodiments, the controller 140, when face images of at least two users are photographed through the photographing unit 110, and viewing time information related to face images of the photographed at least two users is pre-stored in the storage 130, controls the output unit 120 to display a subject selection menu to select a user to control content viewing time from among the photographed two users. Then, the controller 140, based on viewing time information of a user selected through the selection menu displayed on the screen, may determine remaining viewing time of content which is being output.

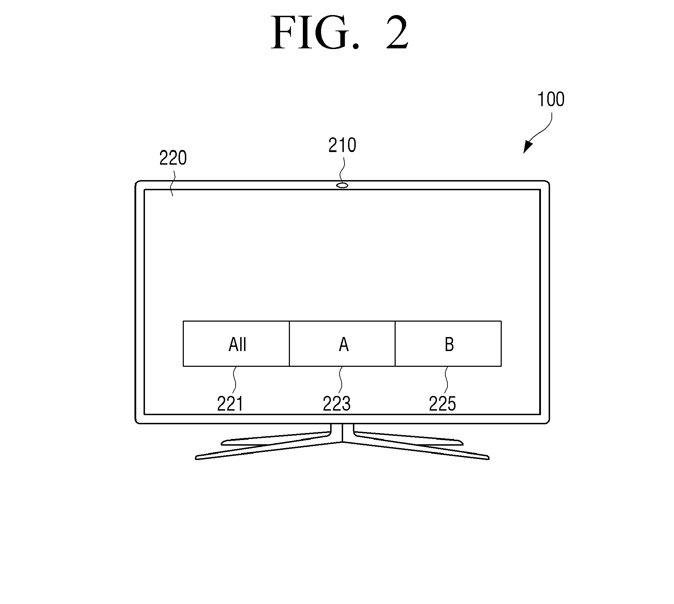

FIG. 2 illustrates an exemplary view for selecting a user who determines remaining viewable time at a display apparatus 100 among a plurality of users, according to an exemplary embodiment.

As illustrated in FIG. 2, the photographing unit 110 may photograph face images of a plurality of users through a camera 210 provided on top of the display apparatus 100. As such, when face images of a plurality of users are photographed, the controller 140 obtains, from the storage 130, viewing time information which is set by a plurality of users photographed through the camera 210.

As described, when viewing time information of a user A and a user B is obtained from among a plurality of users photographed by a camera, the controller 140 generates a selection menu to select a user to control content viewing time between the user A and the user B, according to an exemplary embodiment. That is, the controller 140, when viewing time information of the user A and B is obtained, generates a first control menu to control output of content based on general viewing mode, a second control menu to control output of content based on viewing time information of a user A, and a third control menu to control output of content based on viewing time information of a user B, and controls the output unit 120 to output the generated first to third control menus.

Accordingly, on a screen 220 of the display apparatus 100, a first menu item 221 which indicates selection of all (All) users in relation to the first to third control menus, a second menu item 223 which indicates selection of the user A, and a third menu item 225 which indicates selection of the user B may be displayed. While said first to third menu items 221, 223, 225 are displayed on a screen, when a selection command is input through the input unit 160 or a selection command is received through the communicator 150, the controller 140 may control the output unit 120 to output content based on a menu item corresponding to the selection command.

For example, when a selection command for the second menu item 223 is input or received, the controller 140 may determine remaining viewable time of the content which is output through the output unit 120 based on content viewing time information included in viewing time information of the user B which corresponds to the second menu item 223, according to an exemplary embodiment.

As such, when remaining viewable time is determined, the controller 140 may control output of the output unit 120 based on the determined remaining viewable time. To be specific, after viewing time information is obtained, the controller 140, when content requested by a user is output through the output unit 120, counts remaining viewable time based on content viewing time information included in the obtained viewing time information. Along with this, the controller 140 controls the photographing unit 110 so that a face image of a user is photographed at a preset time interval. According to the control command, the photographing unit 110 may photograph a face image of a user within a photographing area which is preset in a preset time interval. According to the exemplary embodiment described above, the photographing unit 110 may detect a face area of a user per preset time interval by using face recognition algorithm and photograph a face image of a user based on the detected face area.

Accordingly, the controller 140, when a face image is photographed at a preset time interval through the photographing unit 110, continues counting the remaining viewable time based on content viewing time included in the pre-obtained viewing time information. That is, the controller 140, when a face image is photographed at a preset time interval through the photographing unit 110, determines whether a face image of the same user is being photographed by comparing the photographed face image with a face image pre-stored in the storage 130.

As a result, when it is determined that the face image of the same user is being photographed, the controller 140 continues counting remaining viewable time based on content viewing time information included in the pre-obtained viewing time information.

Meanwhile, when a face image is not photographed at a preset time interval through the photographing unit 110, the controller 140 holds remaining viewable time which is counted before the point in time when the face image is not photographed through the photographing unit 110. However, the embodiments are not limited thereto, and if it is determined that a face image of the same user is not photographed by comparing the face image photographed through the photographing unit 110 at a preset time interval and the pre-stored face image, the controller 140 may hold remaining viewable time which is counted before the point in time when the face image of a different user is determined to have been photographed through the photographing unit 110.

As described above, while remaining viewable time is held for content, when a face image of the corresponding user is photographed through the photographing unit 110 within a preset threshold time, the controller 140 resumes counting the remaining viewable time of the content from the remaining time which is being held. On the other hand, the controller 140, while remaining viewable time of the content is being held, when a face image of the user is not photographed through the photographing unit 110 within a preset threshold time, controls output of the content which is being output. According to an exemplary embodiment, the controller 140, while remaining viewable time on the content is being held, when a face image of a user is not photographed through the photographing unit 110 within a preset threshold time, may control to terminate output of the content which is being output. According to the control command, the output unit 120 may terminate output of the content which is being output.

According to an additional aspect of an exemplary embodiment, the controller 140, when a face image is not photographed at a preset time interval, or a face image of a same user is not photographed successively, may control output of the content which is currently output through the output unit 120. According to an exemplary embodiment, if a face image is not photographed successively at preset time intervals, or a face image of the same user is not photographed successively, the controller 140 may control the output unit 120 to temporarily stop output of the content which is being output through the output unit 120. According to the control command, the output unit 120 may temporarily stop output of the content which is being output.

When remaining viewable time of the content is being held, while output of the content is temporarily stopped, if a face image of the corresponding user is photographed through the photographing unit 110 within a threshold time, the controller 140 resumes counting of the remaining viewable time of the content from the remaining time being held. Furthermore, the controller 140 controls the output unit 120 to resume output of the content. Accordingly, the output unit 120 may resume output of the content which is temporarily stopped.

Hereinafter, the operation to determine remaining viewable time of the content depending on whether a video image is successively photographed at the display apparatus 100 will be described in greater detail.

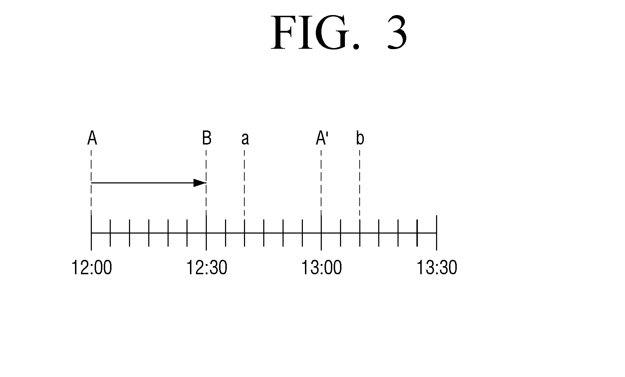

FIG. 3 illustrates an exemplary view for selecting a user who determines remaining viewable time of content at a display apparatus, according to an exemplary embodiment.

As illustrated in FIG. 3, the controller 140 may obtain pre-stored viewing time information in relation to a face image photographed through the photographing unit 110, and the corresponding viewing time information may include content viewing time information of 1 hour, according to an exemplary embodiment.

After the viewing time information is obtained, when the time at which content is output through the display apparatus 100 is 12:00 and when viewable time of the content is set to 1 hour based on content viewing time information, according to an exemplary embodiment, the controller 140 sets content viewing termination time to 13:00 and resumes counting of remaining viewable time of the content based on the set content viewing termination time.

As described above, when counting resumes from the set remaining time, the controller 140 controls to photograph a face image of the user at preset time intervals. Accordingly, the photographing unit 110 may photograph a user who is located in a preset photographing area at a preset time interval. For example, when preset time interval is set to 5 minute intervals, the photographing unit 110 may photograph a user located in the preset photographing area every 5 minutes, according to an exemplary embodiment.

Therefore, the controller 140, by comparing a face image of a user who is photographed through the photographing unit 110 every five minutes with face images pre-stored in the storage 130, determines whether a face image of the same user is being photographed. As a result of the determination, if the face image is the same, counting is performed continuously in consideration of remaining time which is set to 13:00.

The controller 140, after a face image of the corresponding user is photographed through the photographing unit 110 at 12:30, when the face image of the corresponding user is not photographed through the photographing unit 110 at 12:35, which is after the 5 minutes preset interval of time, the controller 140 holds the remaining time which was counted at the time when the face image was photographed at 12:30. In other word, if it appears that counting for remaining time resumes in consideration of the content viewing time of 1 hour, and the face image of the user is not photographed after 12:30, the controller 140 holds counting of the remaining time at 30 minutes.

Then, the controller 140 determines whether the face image of the user is photographed within preset threshold time. For example, when the preset threshold time is 15 minutes, the controller 140 determines whether the face image of the user is photographed through the photographing unit 110 within 15 minutes from the last time when the face image of the user is photographed, according to an exemplary embodiment. In the example described above, when the face image of the user is last photographed at 12:30, the controller 140 may determine whether or not the face image of the user is photographed within 15 minutes from 12:30.

As a result of the determination, if it is determined that the face image of the user is photographed again after 10 minutes from the time when the face image was last photographed, the controller 140 performs counting again based on the time when the face image of the user is photographed again, and the remaining time which is being held. For example, if the time when the face image of the user is photographed again is 12:40, and the remaining time which is being held is 30 minutes, the controller 140 resets the content viewing termination time to 13:10. Then, the controller 140 performs counting from the time when the face image of the user is photographed again to the time when viewing of the re-set content is terminated.

Then, when the face image of the user is continuously photographed through the photographing unit 110, counting of the remaining viewable time is continued, and for all the remaining time until the viewing termination time is elapsed, the controller 140 controls the output unit 120 to terminate output of the content.

When output of the content is terminated, the controller 140 controls the output unit 120 to output a message for termination of viewing time and a password input field for extension of viewable time of the content. Accordingly, the output unit 120 may output a message for termination of viewing time and password input field for extension of viewable time of the content.

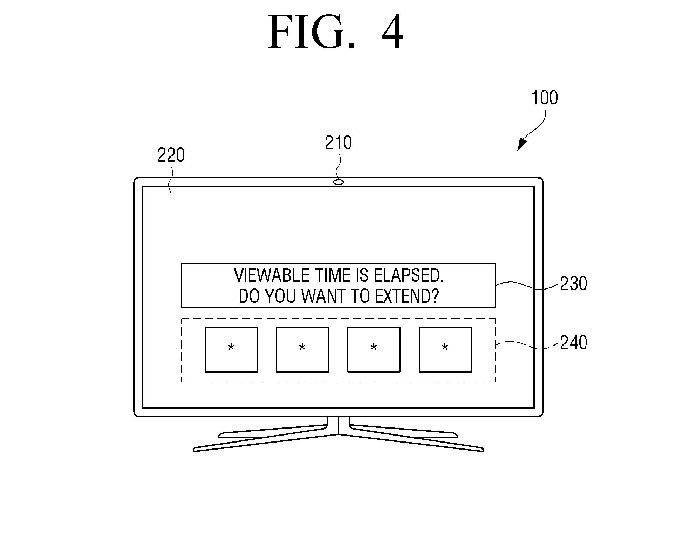

FIG. 4 illustrates an exemplary view guiding extension of content of which viewable time is terminated, at a display apparatus, according to an exemplary embodiment.

As illustrated in FIG. 4, when viewing time of the content which is output through the output unit 120 is terminated, the controller 140 controls the output unit 120 to terminate or temporarily stop output of the content. Then, the controller 140 generates a message for termination of viewing time 230 and password input field 240 for extension of viewable time of the content. Accordingly, the output unit 120, after terminating or temporarily stopping output of the content which is being output, may output a message for termination of viewing time or password input field for extension of viewable time of the content.

In other words, on the screen 220 of the display apparatus 100, a message 230 which notifies "Viewable time is elapsed. Do you want to extend?" and an input window 240 allowing as user to input a password for extension of the content may be displayed. On the other hand, the controller 140 may transmit to the preregistered periphery terminal (not illustrated) the message 230 which notifies "Viewable time is elapsed. Do you want to extend?" through the communicator 150.

Then, when password information is received from the periphery terminal (not illustrated) through the communicator 150 or password information is input through the input unit 160, the controller 140 may determine extension of viewing of the content according to comparison between the input/received password information and the password information preregistered in the storage 130.

As a result of the comparison, when the received or input password information is the same as the preregistered password information, the controller 140 determines extension of viewing of the content, and controls the output unit 120 to output the content of which extension of viewing is determined. According to the control command, the output unit 120 may perform output of the content from the time when output of the content is terminated or stopped.

The controller 140, when output of the content resumes through the output unit 120, as described above, may perform counting of remaining viewable time based on preset time information, and when all the remaining time is elapsed, may terminate output of the content or determine extension of viewing, as described above.

The display apparatus 100 according to another exemplary embodiment may not only propose viewing of the content by a user based on content time information included viewing time information of a user but also may selectively provide content suitable for a user.

For example, viewing time information obtained in relation to a face image photographed through the photographing unit 110 may not include content time information to propose viewing of the content, but may include content information to provide a user with specific content. Herein, the content information, for example, may be information on a genre preferred by a user. If the genre preferred by the user is sports or soap opera which is stored in the content information, the controller 140, when the display apparatus 100 is powered on, may display on a screen a channel list providing content related to sports and soap opera, from among a plurality of channels, based on pre-stored Electronic Program Guide (EPG) information and content information of the user. Accordingly, a user may select a desired channel, from among the channel list displayed on a screen, and the output unit 120 may output content received from a channel tuned through the tuner (not illustrated) in response to a command to select a user.

As another example, viewing time information obtained in relation to a face image photographed through the photographing unit 110 may include content time information and content information to propose viewing of content by a user. In such a scenario, the controller 140, as described above, when content is output using the output unit 120 through the tuned channel in response to the selection command by a user, may perform counting of remaining viewable time of the content which is being output based on content time information included in the corresponding viewing time information. As such, the operation to propose viewing of the content has been explained above, and thus, will not be further detailed below.

As described above, the display apparatus 100 according to an exemplary embodiment may differently tune remaining viewable time of content which is being output in accordance with pre-stored viewing time information of a user and depending on whether a video image of the user is continuously photographed. Furthermore, the display apparatus 100 provides channel information on a channel providing content of a genre suitable for a user from among a plurality of channels, and thus, a user may more easily search for a channel which provides content of a genre preferred by the user.

Hereinafter, a method for controlling operations of the display apparatus 100 will be explained in greater detail.

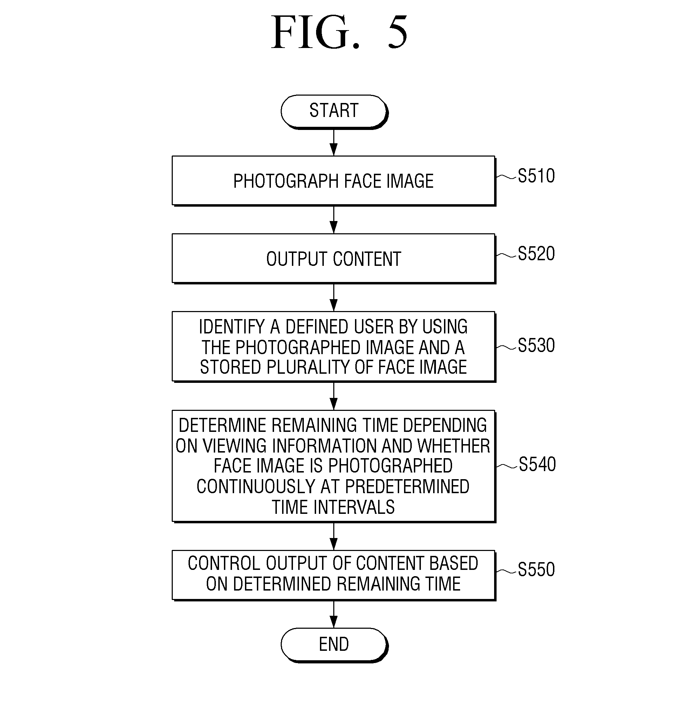

FIG. 5 illustrates a flowchart of a method for controlling the operations of a display apparatus according to an exemplary embodiment.

As illustrated in FIG. 5, the display apparatus 100, when power is supplied according to a power on command, recognizes face of a user through a camera using a predetermined face recognition algorithm, and takes a photograph of an image (S510). Then, the display apparatus 100 outputs audio and video data related to content requested by a user (S520).Thereafter, the display apparatus 100 identifies a defined user by using the photographed image and a stored plurality of face images(S530).

the display apparatus 100 determines remaining viewable time of defined user based on viewing time information corresponding to the defined user from among the plurality of users and whether the defined user is identified in the photographed image on a regular basis (continuously at predetermined time intervals) (S540). Herein, the viewing time information may include content viewing time information to control content viewing time of a user. Accordingly, the display apparatus 100, when pre-stored viewing time information in relation to a face image of a user photographed through a camera is obtained, may determine remaining viewable time based on content viewing time information included in the obtained viewing time information.

According to an additional aspect of an exemplary embodiment, the display apparatus 100, when face images of at least two users are photographed through a camera, may determine a user of a main viewing target of content which is being output, based on content setting information included in viewing time information pre-stored in relation to face images of the at least two photographed users. Herein, the content setting information may be information on a genre of content.

Accordingly, the display apparatus 100 may compare content setting information included in viewing time information of each user and genre information of content which is being output, and determine a user corresponding to a genre which is set for content which is being output, as a user of a main viewing target. As described above, when a user of the main viewing target is determined, the display apparatus 100 may determine remaining viewable time on content which is being output based on content viewing time included in viewing time information of the determined user.

According to an additional aspect of an exemplary embodiment, the display apparatus 100, when face images of at least two users are photographed through a camera, obtains viewing time information pre-stored in relation to face images of the at least two photographed users. As described above, when viewing time information of two users is obtained, the display apparatus 100 displays a selection menu to select a user to control content viewing time from among the two users. Accordingly, the display apparatus 100, as explained in FIG. 2, may display the first menu item 221 which indicates selection of all users (All) which correspond to the first to third control menus, the second menu item 223 which indicates selection of user A, and the third menu item 225 which indicates selection of user B. When a menu item related to a certain user is selected while the selection menu which includes the menu item is displayed, the display apparatus 100 may determine remaining viewable time of the content which is being output based on content viewing time information included in viewing time information of a user which corresponds to the selected menu item.

When the above remaining viewable time is determined, the display apparatus 100 controls output of the content based on the determined remaining viewable time (S550). According to an exemplary embodiment, when remaining viewable time is determined, the display apparatus 100 may terminate or stop the content which is being output based on the determined remaining viewable time.

Hereinafter, a method for determining remaining viewable time of the content which is being output on the display apparatus 100 will be explained in greater detail.

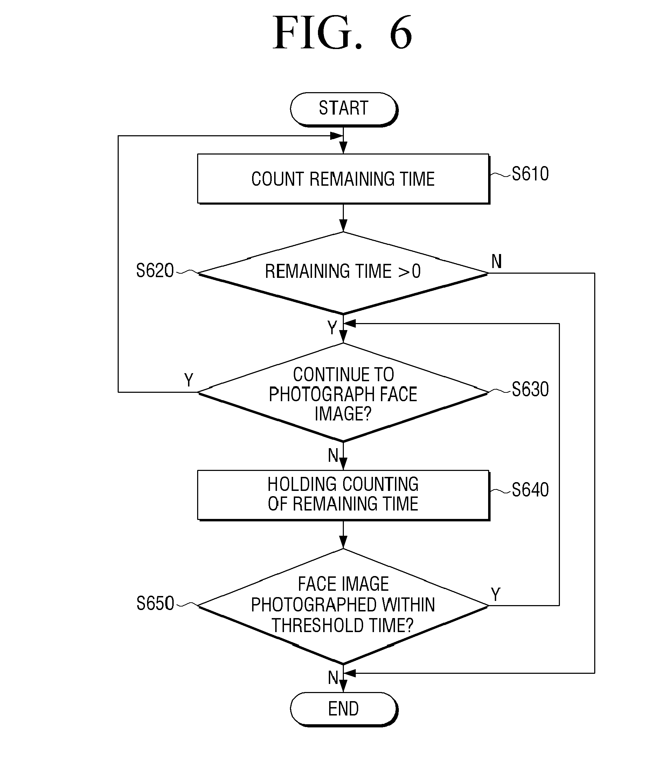

FIG. 6 illustrates a flowchart of a method for determining remaining viewable time of content at a display apparatus according to an exemplary embodiment.

As illustrated in FIG. 6, the display apparatus 100, when preset viewing time information is obtained in relation to a pre-photographed face image of a user, resumes counting of remaining viewable time of the content which is being output based on content viewing time information included in the obtained viewing time information (S610).

When counting resumes, the display apparatus 100 performs photographing of a user within a preset photographable scope at a preset time interval. When photographing of a face image of a user is performed at a preset time interval, the display apparatus 100 determines whether a face image of the same user is being photographed, by comparing a face image photographed at a preset time interval with a pre-stored face image. As described above, when it is determined that a face image of the same user is photographed at a preset time interval, the display apparatus 100 may continue counting of remaining time, and determine whether counted remaining time reaches 0 which indicates that viewing of the content has reached the time limit and should be terminated. If counted remaining viewable time is left, the display apparatus continues taking photographs of a face image through a camera at preset/predetermined time intervals until remaining time reaches 0 indicating that viewing is terminated (S620, S630).

While viewable time of the content remains, when a face image of the user is not photographed through a camera at a preset time interval, the display apparatus 100 performs holding of counting after the remaining time counted at the last point in time when a face image of the user was photographed (S640).

When counting of remaining time is held, the display apparatus 100 determines whether a photograph of a face image of the user is taken again within a preset threshold time (S650). As a result, when a face image of the user is not re-photographed within a preset threshold time, or a face image of another user is photographed, the display apparatus 100 terminates output of the content which is being output. When it is determined that a face image of the user is re-photographed within a preset threshold time, the display apparatus 100 performs at least one operations from among the above-description S610 to S640 before all the remaining time is elapsed.

When entire viewable time of the content is elapsed through the operations, the display apparatus 100 may terminate or extend viewing of the content.

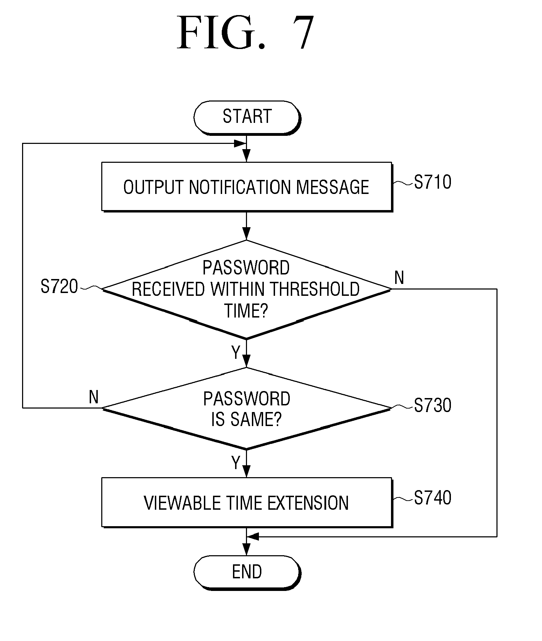

FIG. 7 illustrates a flowchart of a method for controlling output of content of which viewable time is terminated, according to an exemplary embodiment.

As illustrated in FIG. 7, when entire viewable time of the content which is being output is elapsed, the display apparatus 100 terminates output of the content. Thereafter, the display apparatus 100 outputs a message indicating termination of viewing time and a password input field for extension of viewable time of the content (S710). In such a scenario, the display apparatus 100 may transmit to a pre-registered periphery terminal (not illustrated) a message which guides termination of content and password input field for extension of viewable time.

Then, the display apparatus 100 judges whether or not password information is input or received from a periphery terminal (not illustrated) within a preset threshold time (S720). As a result, when password information is input or received within preset threshold time, the display apparatus 100 compares the password information with pre-registered password information and determines whether the password information and the pre-registered password information are the same, i.e. the input password is authorized (S730). As a result, when the input password is not authorized, the display apparatus 100 may display an on-screen message which indicates that password information is not correct, and may determine whether new password is input or received within preset threshold time through the above-described (S720).

On the other hand, when two pieces of password information are the same to each other, the display apparatus 100 determines viewable time extension of the content and outputs the content based on the determined result (S740). In such a scenario, the display apparatus 100, when output of the content resumes according to the decision of viewing time extension, may perform counting of the viewable time again based on the preset proposed time information and terminate output of the content of which viewable time is extended, based on the extended time information.

According to the various exemplary embodiments as described above, a display apparatus, depending on whether the already photographed face image of a user is photographed on a regular basis, may adjust remaining viewable time of the content which is set based on viewing time information of a corresponding user, and control output of the content which is displayed on a screen based on adjusted remaining time.

Accordingly, the various exemplary embodiments may prevent a user with weak judgment from thoughtlessly/without authorization using content through a display apparatus.

The foregoing embodiments and advantages are merely exemplary and are not to be construed as limiting. The present teaching can be readily applied to other types of apparatuses. Also, the description of the exemplary embodiments of the present inventive concept is intended to be illustrative, and not to limit the range of the claims, and many alternatives, modifications, and variations will be apparent to those skilled in the art.

## Claims

1. A display apparatus, comprising:
a photographing unit configured to photograph an image;
an output unit configured to output audio data and video data related to content;
a storage configured to store a plurality of face images corresponding to a plurality of users, and viewing time information to control content viewing time of at least one user from among the plurality of users; and
a controller configured to identify a defined user by using the photographed image and the stored plurality of face images, to determine a remaining viewable time of the defined user based on viewing time information corresponding to the define user from among the plurality of users and whether the defined user is identified in the photographed image continuously at predetermined time intervals, and control output of the output unit based on the determined remaining viewable time.

2. The apparatus as claimed in claim 1, wherein the controller is configured to, in response to the content being output through the output unit, after obtaining pre-stored viewing time information corresponding to the defined user, control the photographing unit to photograph the image at the predetermined time intervals.

3. The apparatus as claimed in claim 2, wherein the controller is configured to, in response to the image being photographed at the predetermined time intervals by the photographing unit, count the remaining viewable time of the content based on content viewing time information included in the viewing time information.

4. The apparatus as claimed in claim 3, wherein the controller is configured to, in response to the image not being photographed at the predetermined time intervals by the photographing unit, hold the remaining viewable time of the content at a point in time when the face image of the user was last photographed.

5. The apparatus as claimed in claim 4, wherein the controller is configured to, in response to the image not being photographed at the predetermined time intervals by the photographing unit, control the output unit to stop output of the content.

6. The apparatus as claimed in any one of claim 4 or claim 5, wherein the controller is configured to, while the remaining viewable time of the content is being held, based on whether the image is photographed within a predetermined threshold time by the photographing unit, controls the output unit to resume counting of the remaining viewable time of the content from the remaining viewable time being held, or to terminate output of the content.

7. The apparatus as claimed in any one of claim 3 to claim 6, wherein the controller is configured to, in response to the remaining viewable time being elapsed, control the output unit to terminate output of the content and to output a message which indicates expiration of allowed viewable time of the content and to display a password input field for extension of the allowed viewable time of the content.

8. The apparatus as claimed in claim 7, further comprising:
a communicator configured to communicate with a preregistered periphery terminal; and
an input unit configured to receive a user input,
wherein the controller is configured to, in response to the remaining viewable time of the content being elapsed, transmit through the communicator the message to the preregistered periphery terminal, and determine an extension of the allowed viewable time of the content depending on whether the preregistered password information is received through the communicator within a predetermined threshold time or whether the password information is input through the input unit.

9. The apparatus as claimed in any one of claim 1 to claim 8, wherein the controller is configured to, in response to images of at least two users being photographed by the photographing unit, display a selection menu to select one of the at least two users for control of content viewing time from among the at least two photographed users, and determine the remaining viewable time of the content based on viewing time information of the selected user.

10. The apparatus as claimed in any one of claim 1 to claim 9, wherein the controller is configured to, in response to images of at least two users being photographed by the photographing unit, determine the remaining viewable time of the content based on viewing time information of a selected user selected as a major viewing target of the content which is output through the output unit out, from among the at least two users, in accordance with content setting information included in pre-stored viewing time information related to the photographed images of the at least two users.

11. A method for controlling a display apparatus, the method comprising:
photographing an image;
outputting audio data and video data related to content;
identifying a defined user by using the photographed image and a stored plurality of face images;
determining a remaining viewable time of the defined user based on viewing time information corresponding to the defined user from among the plurality of users and whether the defined user is identified in the photographed image continuously at predetermined time intervals; and
controlling output of the content based on the determined remaining viewable time.

12. The method as claimed in claim 11, wherein the viewing time information comprises content viewing time information to control a content viewing time of the user and the photographing, and
the photographing comprises, in response to the content being output after obtaining pre-stored viewing time information related to the defined user, photographing the image at the predetermined time intervals.

13. The method as claimed in claim 12, wherein the determining comprises, in response to the image photographed at the predetermined time intervals, counting the remaining viewable time of the content based on content viewing time.

14. The method as claimed in claim 13, wherein the determining comprises, in response to the image not being photographed at the predetermined time intervals, holding the remaining viewable time of the content at a point in time when the face image of the user was last photographed.

15. The method as claimed in claim 14, wherein the controlling comprises, in response to the image not being photographed at the predetermined time intervals, stopping output of the content.
